Europäisches Patentamt

European Patent Office

Office européen des brevets

(11) Publication number: **0 340 355**
**A1**

## EUROPEAN PATENT APPLICATION

(21) Application number: **88304019.8**

(22) Date of filing: **04.05.88**

(51) Int. Cl.4: **A21D 2/22 , A21D 2/26 , A21D 2/38**

(43) Date of publication of application:
**08.11.89 Bulletin 89/45**

(84) Designated Contracting States:
**AT BE CH DE ES FR GB GR IT LI LU NL SE**

(71) Applicant: **NUTRA PRODUCTS INC.**
**1260 North 200 East, Suite 18**
**Logan Utah 84321(US)**

(72) Inventor: **Ferrara, Peter Joseph**
**Box 441**
**Cornwall New York 12518(US)**

(74) Representative: **Green, Alan James et al**
**SANDERSON & CO. European Patent**
**Attorneys 34, East Stockwell Street**
**Colchester Essex CO1 1ST(GB)**

(54) A process for producing baked cereal goods and goods when produced thereby.

(57) The process of the invention for producing baked cereal goods comprises forming a dough including at least about 450 ppm by weight of ascorbic acid based on the total weight of dry ingredients, and fermenting and baking the dough. The process is particularly useful for producing a yeast leavened wheat bread from a dough comprising baking flour. The dough may also include vital wheat gluten, wheat germ having substantially no glutathione, and soybean flour or soya concentrate sufficient to provide a final baked bread containing from about 18 to about 25% by weight of protein. Additionally there is from about 450 to about 850 ppm by weight of ascorbic acid based on the total weight of dry ingredients and from about 5 to about 10% by weight of potassium bromate based on the ascorbic acid. Together with water those ingredients are formed into a dough which is fermented and baked.

EP 0 340 355 A1

# A PROCESS FOR PRODUCING BAKED CEREAL GOODS AND GOODS WHEN PRODUCED THEREBY

The present invention relates to a process for producing baked cereal goods such as bread and goods when produced thereby, in particular bread with high levels of protein using ascorbic acid as dough conditioner.

Thus, this invention provides for the processing of ingredients useful for baked goods. Among these are wheat germ, soybean flours and dry inactive food yeasts. These and similar foods processed by means of this invention may be incorporated with vital wheat gluten and wheat flours to produce yeast leavened breads. Furthermore, using the process of this invention the processed ingredients may be used in conventional bakery equipment to achieve high levels of protein (up to say 20 to 25% protein by weight in the bread as baked) compared to 8% protein for a standard white loaf.

One of the elements which governs the processing of breadmaking ingredients prior to the sequence of formation, mixing, fermentation and baking of the breads is disclosed in U.S. Patent Specification No. 3,519,441. That earlier disclosure describes treating full fat natural wheat germ, wheat flours and soybean flours to satisfy three conditions. First, the thermal (by steaming) destruction and elimination of microorganisms. To the extent that certain criteria are met, this style of heat treatment enables the production of weevil-free storageability without chemicals, plus extended shelf-life. Secondly, the thermal treatment by steaming at moderate pressures is continued beyond the requirement of eliminating microbial contamination, to the point where the products so treated are substantially free of enzymatic activity including the thermally resistant enzymes classed as oxidases. Thirdly, the processing is further extended to eliminate free SH groups either as glutathione or cysteine. These are known to have strong reducing properties with marked effects on the protein gluten structure in yeast leavened breads.

In the case of processing wheat germ to the extent where free SH groups are eliminated, at least to the point of being non-detectable by known nitroprusside test procedures, the germ so treated was found to have a pleasing toasted flavour with exceptional storage stable properties, without requiring refrigeration or vacuum packing.

A completely unexpected feature arising from the elimination of SH groups in wheat germ which was neither appreciated nor understood at the date of the above U.S. specification is the discovery that when SH free processed wheat germ is ground to a fine flour in the range of 24 to 30 mesh size, U.S.S., its stability is greatly increased. The wheat germ flour is not only storage stable relative to the formation of free fatty acids, but the flavour is well maintained for periods of 6 months. This phenomenon while not understood may be explained in theory as being due to the grinding of the processed wheat germ flakes which probably exposes more of its naturally occurring anti-oxidant, somewhat similar to that which has been isolated and identified in processed oats.

Free SH groups in natural full-fat wheat germ are generally present in an amount to make bread bakers hesitant to use wheat germ in amounts in excess of from 1% to 2%, though the standards for "enriched bread" permit the usage of wheat germ up to 5% of the flour ingredient. Instead, bakers interested in using wheat germ for enriched or speciality breads are limited to modest amounts of solvent extracted or defatted wheat germ. These are essentially oil-free and seem easier to deal with in baking breads.

Having cited the steam processing which eliminates the action of free SH groups inherent in wheat germ, the further preferred objectives which follow are more readily appreciated. One of these preferred objectives is to incorporate steam processed full-fat wheat germ in yeast leavened breads at levels high enough to impart flavour, nutrition and desired values in terms of protein level.

Another preferred objective of this invention is to incorporate steam treated full-fat soybean flours in conjunction with the processed wheat germ.

In addition, a preferred objective of this invention is to produce yeast leavened breads supplementing the protein content of commercial wheat flours with vital wheat gluten so as to produce loaves having good crumb texture and oven spring with bread densities in the range of from 440 to 520 ml per 100 grams of bread.

These and other preferred objectives will be apparent from the following disclosures and specific examples contained herein.

For a long time, bakers have sought different ways of applying increased energy or work to yeasted doughs with the idea of shortening or eliminating the standard techniques of bulk fermentation. This interest was accompanied by research on the functionality of dough improvers and conditioners, some to strengthen gluten and others to achieve mellowing or softening to match the changes taking place in dough fermentation. There was general agreement that dough improvers acted upon the SH linkages in wheat flours. The literature on "dough improver" research is extensive, going back to H. JORGENSEN (1935 BIOCHEM Z CCLXXI) and the research of W.S. HALE and associates (1939 CEREAL CHEM. XVI, 605).

JORGENSEN in U.S. Patent Specification No. 2,149,682 describes the use of ascorbic acid in amounts up to 50 ppm as a flour and bread improver in conventional dough processes. The early work revealed that the improving effects of ascorbic acid, like that of potassium bromate, resulted in finer grain and greater loaf volume. Later, there was general agreement that the oxidative effect of ascorbic acid is the consequence of enzymatic oxidative action which transforms the ascorbic acid into dehydroascorbic, the oxidized form of ascorbic acid.

Today, there is a greater understanding of the mechanics enabling ascorbic acid to function as a dough improver. During dough fermentations the oxidative improvers are acting on the protein components which include glutathione (SH) or other reducing agents in flour. These reducing substances have the capability of activating proteinases which in turn serve to mellow or soften gluten just as if this were accomplished through increased energy input.

This theory of proteinase activation by reducing agents was in part the basis of the invention described in U.S. Patent Specification No. 4,145,225. In that earlier invention, hydrogen cyanide (HCN) is employed as a reducing agent acting on wheat flours. The surprising development is that a proteolytic enzyme system subjected to treatment with cyanide is so strongly activated by HCN that it brings about both the devitalization of the wheat gluten, and the substantial destruction of other enzymes like amylases and even oxidases. How this is achieved may not be understood, though it becomes evident the destruction of the flour enzymes achieves the same high paste viscosity characteristics as have steam treated flours. From this result one can conclude that an activated proteinase apparently cannot distinguish between the molecular structure of gluten proteins, and those of enzymes.

In 1953, Wallace and Tiernan Co. introduced the DO-MAKER PROCESS. In this process a liquefied sponge was processed continuously with a charge of yeast and nutrients to a "developer" tank where the fermentation process interval was reduced to a short time. The key to the process was the use of a reducing agent, cysteine, which was known to act on the proteins in wheat flour. Shortly thereafter, the American Machine and Foundry (subsequently known as AMF) introduced another version of the continuous bread making process under the name "AM-FLOW". Both the DO-MAKER and AM-FLOW processes required special equipment for pumping fluid doughs, storage and holding vessels, as well as instruments to contend with the addition of yeast nutrients and for pH control. To get around these complexities, scientists and bakers in the U.K. collaborated in the development of the CHORLEYWOOD PROCESS, using more conventional bakery equipment. The original U.K. process relied on a combination of ascorbic acid at 75 ppm and potassium bromate at 20 ppm. By the time the U.K. process was developed there was an appreciation that ascorbic acid, known as a reducing agent, was also capable of assuming the dehydroascorbic state, the oxidized form.

In U.S. Patent Specification No. 3,304,183 there is a disclosure of the application of some of the previous research to a continuous bread process. The principal objectives sought were directed at lowering the mixing speed requirements by means of including from 10 to 200 ppm of ascorbic acid in a variety of flour mixtures; in the fermentation broth; and/or in the oxidant solution. In a continuous dough process about 10 ppm appeared to be adequate in most instances - see column 2, lines 59 to 64 of that specification -although some varieties of flour required higher ascorbic acid levels to reduce the mixing requirement. Thus, at column 3, lines 70 to 72, it is said:

"It is desired that 10 to 120 ppm of ascorbic acid are used and preferably 20 to 80 ppm".

The foregoing commercial practices developed rapidly up to a certain point and then slowed because the bread crumb had such a fine uniform grain that the breads looked artificial and were generally "suspect" among buyers of bread. In any case, these developments brought new focus on how wheat flour proteins were affected by combinations of reducing agents and oxidizing improvers. More and more, flour millers and bakers moved the breadmaking processes in the direction of achieving the equivalent of high energy input into doughs, in shorter intervals and lower mixing requirements.

Referring again to U.S. Patent Specification No. 3,519,441 cited above, at lines 1 to 38 of column 4 it is theorized that glutathione, which can exist both as the reduced form GSH, and the oxidized form G-S-S-G, may in fact serve as a key element in the rapid development of gluten in wheat flours. Part of the problem in supplementing in situ glutathione for the rapid development of dough, is centred on the problem of assessing the quantity in situ. Thus, if one were to establish the total of glutathione useful in a breadmaking process, in terms of GSH, one would then be faced with the problem of identifying the supplement to the in situ version. For this reason, the preferred aim of the invention insofar as use of wheat germ is concerned, is among other features, the complete elimination of glutathione, either as GSH or G-S-S-G. Having achieved this, one is then free to manipulate the addition of improvers independent of the amount of GSH or G-S-S-G in the original sources.

The reason for directing attention to both GSH and G-S-S-G is based on observations that G-S-S-G, the oxidized form of glutathione, when present, is a constant source of GSH. While this phenomenon has been accorded token recognition by investigators, we have found it is equally important to check for G-S-S-G as well as GSH. Tests for the presence of GSH by use of the well known nitroprusside procedures do not show G-S-S-G. To check for G-S-S-G, one must moisten the sample to be examined with a solution of NaCN (sodium cyanide) which is subsequently acidified to generate HCN, enough to reduce the G-S-S-G to GSH. The test sample is then checked for GSH in the usual way.

From tests conducted in the process of steaming wheat germ, we theorized that the steaming process not only transforms the G-S-S-G to GSH, but a portion of the G-S-S-G undergoes "thermal cracking" or "hydrolytic scission", converting the tripeptide into its three amino acids, namely glycine, glutamic acid and cysteine. The cysteine is further transformed from RSH to RSR, the usual way of expressing cystine, the stabilized counterpart of cysteine. Whether or not the process follows the sequence as outlined, the evidence suggesting the simultaneous breakdown of G-S-S-G and GSH is supported by application of the nitroprusside tests in the manner described hereinabove.

The foregoing background is presented to clarify the mechanics of the present invention. As previously set forth, in subjecting doughs to greater inputs of energy the main focus was on fast acting oxidants and reducing agents. The possibility of using slow acting improvers in large amounts received less consideration due to regulatory restraints imposed by governmental bodies. For example, even in the case of ascorbic acid (VITAMIN C) its utility as a dough improver did not exceed the 80 ppm reported in the first CHORLEYWOOD PROCESS. In most breadmaking processes where dough improver uses of ascorbic are reported, use is mainly in the range of 30 to 80 ppm. In relation to use of ascorbic acid primarily to reduce dough mixing speed requirements, Johnston et. al. in U.S. Patent Specification No. 3,304,183, column 5, lines 35 to 39 recite that:

"50 ppm is optimum if the baker finds a reasonable bread score is necessary".

This statement in the earlier specification is greatly expanded to a claimed range of ascorbic acid of 10 ppm to 400 ppm, on a flour basis (see claims 8 and 10).

The present invention comprises an improvement in the art of producing baked, yeast-leavened cereal goods such as bread whereby increased amounts of protein may be incorporated at least essentially without adversely affecting physical and flavour properties. This is accomplished by utilizing large amounts of ascorbic acid in the bread formation. The additional inclusion of potassium bromate in the bread formation has also proved to be helpful and is preferred. Ascorbic acid is used in a proportion of at least about 450 ppm. No particular advantage has been observed when more than about 850 ppm ascorbic acid is used. The potassium bromate is a useful bread dough improver when used in a proportion of at least about 30 ppm, along with ascorbic acid. Such proportions are on the basis of weight percentage of the total dry ingredients.

In the course of our research on breadmaking we found it was difficult to produce breads of good quality even if the glutathione free processed wheat germ was used at low levels of from about 5 to about 10% of the bread ingredients. This disappointment persisted even with the use of 200 ppm of ascorbic acid and 50 ppm of potassium bromate, with supplementation vital wheat gluten at levels equal to the baking flour. It was only when we decided to depart from the conventional usage levels of ascorbic acid and potassium bromate that the loaf volume and texture characteristics showed real improvement. When the level of ascorbic acid was increased to 450 ppm and amounts greater than this, improvement of bread quality was evidenced by greater oven spring and loaf volume. The addition of potassium bromate at levels of 30 to 50 ppm contributed to further improvements. These experiments with steam processed wheat germ and soybean flours revealed a whole new area of quality baking performance if the ascorbic acid was used in the range of 450 ppm to 850 ppm, and still further when potassium bromate supplementation was held in the range of 30 to 50 ppm.

Accordingly, in its broadest aspect, the present invention provides a process for producing baked cereal goods such as bread, which process comprises forming a dough comprising one or more cereal products, one or more protein components and water, and including at least about 450 ppm by weight of ascorbic acid based on the total weight of dry ingredients, and fermenting and baking the dough.

In addition, and in a subsidiary and preferred aspect, the invention provides such a process for producing a yeast leavened wheat bread, which comprises forming a dough comprising baking flour, vital wheat gluten, wheat germ having substantially no glutathione, and soybean flour or soya concentrate sufficient to provide a final baked bread containing from about 18 to about 25% by weight of protein; from about 450 to about 850 ppm by weight of ascorbic acid based on the total weight of dry ingredients; from about 5 to about 10% by weight of potassium bromate based on the ascorbic acid; together with water; and fermenting and baking the dough.

Before setting forth an example typical of the process of this invention, we believe it may be useful to review some of the ascorbic acid forms sold commercially, and which are used herein. Ascorbic acid is marketed as a fine granular powder or crystal, both forms being in a pure state assaying above 99% purity. When used in baking a bread mixture of freshly prepared ingredients, the pure powder or crystal may preferably be used. If the bread ingredients are blended and stored for future use, the ascorbic acid used is preferably one coated with a water soluble material like ethyl cellulose. The coating prevents contact of the ascorbic acid with reactive ingredients likely to reduce its effectiveness. The coated grades with ethyl cellulose assay a minimum of 97.5% ascorbic acid. The dough improvement action of the ascorbic acid is initiated immediately when water is added to the ingredients since the water dissolves off this coating.

Ascorbic acid is also commercially available with water-insoluble fatty coatings having high melting points so the release of the ascorbic acid is delayed until well into the oven baking step. (See U.S. Patent Specification No. 3,959,496, the encapsulation process licensed to Balchem Corporation of Slate Hill, New York, as well as sales literature of Balchem offering ascorbic acid with a 50% added fatty coating).

The four main ingredients used in the preferred process of the invention to produce a high protein bread are baking flour (bakery grade), which preferably may form about 50% by weight of the dry dough overall, vital wheat gluten, wheat germ, and a soybean flour or concentrate. More preferably, the dough contains from about 16 to about 24% by weight of wheat germ and/or from about 6 to about 10% by weight of soybean flour or soya concentrate and/or from about 18 to about 25% by weight of wheat gluten. Typically, the dough contains about 20% by weight of wheat germ and/or about 8% by weight of soybean flour or soya concentrate and/or about 22% by weight of wheat gluten, the balance typically being about 50% by weight of baking flour (on a dry basis).

The baking flour used is preferably an enriched grade which typically may have a minimum 13% protein. The wheat gluten is preferably a high quality vital gluten with about 75% protein and water absorption in the range of from about 130 to about 140%. In addition, the wheat germ is preferably one having substantially no glutathione, more preferably a steam treated full fat wheat germ having substantially no glutathione.

Thus, the wheat germ is preferably freshly milled full fat natural germ with oil content of from about 9 to 12%, and protein in the range of from about 26 to about 29%. The wheat germ additionally is preferably one conventionally processed with steam in accordance with the techniques described in U.S. Patent Specification No. 3,519,441, to eliminate free SH so that substantially none is evidenced by nitroprusside tests. Then the germ is ground to a fine meal, suitably about 30 mesh (USS screen).

The soybean flour may be one obtained in one of several ways. Thus, soybean grits or flakes made from de-hulled beans may be treated with steam in the same manner as that applied to wheat germ. Such grits or flakes assay at about 20% oil and from about 42 to about 44% protein. Alternatively, defatted soya flour containing less than about 1% oil, with protein levels around 58 to 60% may be used. The considerable research over the past 50 years directed at improving the flavour of soya flour products, has resulted in novel soya protein concentrates. Generally the concentrate, the end product of removing oil plus water-soluble non-protein components, will assay at from about 68 to about 70% protein (N x 6.25). The concentrate is often preferred because use of such greatly diminishes the risk of "rope spore" development, especially in breads.

Alternatively, and wholly or partly in place of the preferred soybean flour or concentrate, there may be used dried food yeast(s) (inactive), milk solids, corn protein(s) and the like as a source of protein to provide the desired protein level. Also, as indicated below, sources of vegetable fibre may be included in the dough to be baked.

In carrying out the process of the invention it is preferred to employ a two-stage preparation of the final dough mixture which is to be baked. Thus, preferably the process of the invention includes the steps of separately preparing compositions for a sponge and for the balance of the ingredients of the final dough mixture, the sponge composition and the remaining dough ingredients' composition being combined prior to baking to give the dough to be baked. In such a process the compositions as separately prepared may each comprise the same or different ingredients in the same or different proportions as required or desired and in accordance with the techniques understood in the art, provided the two when combined afford the desired dough to be baked in accordance with this invention.

Typically, the ingredients may be apportioned between the sponge and remaining ingredients' compositions as described more specifically below. Thus, as there shown the ascorbic acid may be apportioned between the two compositions and mixed e.g. dry, with separate sponge and other dough ingredients. For example, the ascorbic acid may be apportioned on a from about 6:4 to about 4:1 e.g. about 2:1, basis as shown and discussed below, and the whole of the potassium bromate as used may be in the sponge composition. As is clear from the description below, and as is known in the art, the sponge phase includes some initial fermentation.

The ingredients cited hereinabove are used to make high protein breads in the preferred range of from about 18 to about 25% protein, based on the weight of the bread, with moisture in the bread being from about 38 to about 42% as shown for the purposes of illustration only by the following specific Example.

## EXAMPLE

The table below shows a typical ingredient mix for a sponge-dough bread approximating 20% protein. By altering the percentages and including supplementation with dried food grade yeasts and sources of vegetable fibre, the final protein level in the bread can be adjusted to suit various marketing requirement.

| TYPICAL BREAD INGREDIENT SCHEDULE (PER 100 KILOS) | | | | | |
|---|---|---|---|---|---|
| Ingredient | Amount in Kilos | Percent Protein | Kilos of Protein | Distribution of Ingredients in Kilos | |
| | | | | Sponge | Other Dough Ingredients |
| Wheat Germ | 20 | 27 | 5.40 | 12 | 8 |
| Soya Concentrate | 8 | 66 | 5.28 | 5 | 3 |
| Wheat Gluten | 22 | 75 | 16.50 | 22 | 0 |
| Wheat Flour | 50 | 13 | 6.50 | 30 | 20 |
| Totals | 100 | | 33.68 | 69 | 31 |
| Protein in Bread  =  33.68 x 60%  =  20.2% | | | | | |

### The Sponge

The above ingredients for the sponge are placed in a mixer. In addition, 200 grams of ammonium chloride, 400 grams of calcium hydrogen phosphate, 38.5 grams of ascorbic acid and 14.5 grams of potassium bromate are added. The ingredients are mixed. 2 kilos of active compressed yeast are mixed with 60 kilos of water adjusted to 28.0° C. Yeast solution is added to the sponge and mixed until smooth and elastic (about 6 to 8 minutes). Target temperature 28 to 29° C. When the sponge has at least doubled its original volume (60 to 70 minutes) it is ready for the other dough ingredients.

### The Other Dough Ingredients

The other dough ingredients are mixed with 125 to 250 grams of calcium proprionate and 19.2 grams of ascorbic acid. 2 to 4 kilos of sugar are dissolved in 23 kilos of water at 27.0° C. The dry ingredients are added to the sponge. Sugar-water solution is then added. When well mixed (2 minutes), 1 to 1.25 kilos of salt are added and mixing continued for a total of 4 to 5 minutes (approximately one-half sponge mix time). The dough is allowed to rest for about 5 minutes.

### Baking

After the dough rest period, it is scaled and rounded and then shaped for depositing in pan. Prove until dough reaches desired level in pan (40 to 60 minutes). Bake at 195° C to 210° C for 28 to 35 minutes.

This formulation is predicated on using ascorbic acid at 570 ppm combined for sponge and other dough ingredients, and potassium bromate on sponge side at 30 ppm. Optimum baking is obtained apportioning the total ascorbic acid so that 60 to 80% is added via the sponge and the balance to the other dough ingredients. This technique of handling the ascorbic acid results in better dough handling characteristics, greater oven spring, nicer crumb texture and less tendency for sidewalls to collapse. The overall water absorption in the range of about 83 to about 85%, and the water retention ability of the wheat gluten dictate a longer drying (baking) interval, at least 30 to 40% longer than the ordinary breads of commerce.

In many test bakes, the total amount of ascorbic acid has been varied from 200 ppm to 850 ppm. To produce loaf volumes in the ranges of 440 to 520 ml per 100 grams, the amount of ascorbic acid should be at least about 450 ppm, and need not be more than about 850 ppm. As will be appreciated ascorbic acid can disappear by two routes, first it is known to undergo attrition by the natural pathways associated with Vitamin C and, secondly, in its useful function as an oxidative substance in doughs, both of which may be simultaneous and in any event are difficult to separate. When better understood, it will then be possible to account for the improved baking which results when ascorbic acid is used at both the sponge and final dough stages.

The quantity of potassium bromate when used in the range of 30 to 50 ppm suggests that its contribution may primarily be as a "trigger" for the ascorbic acid.

We have described as the invention in its preferred aspects the production of yeast leavened breads, using steam processed wheat germ free of detectable SH, along with a soya product useful for baking, plus vital wheat gluten and a bakery flour; said bread when baked is a bold loaf with about 18 to about 25% protein. Provision is also made for the incorporation of ascorbic acid in both sponge and dough, in a total amount equivalent to from about 450 to about 850 ppm based on the combined dry ingredients. In addition, potassium bromate is preferably used at from about 30 to about 50 ppm in the sponge. The bread so baked is of good volume, it may be sliced and wrapped, with a shelf life equivalent to the usual breads of commerce.

## Claims

1. A process for producing baked cereal goods, such as bread, which process comprises forming a dough comprising one or more cereal products, one or more protein components and water, and including at least about 450 ppm by weight of ascorbic acid based on the total weight of dry ingredients, and fermenting and baking the dough.

2. A process according to claim 1, for producing a yeast leavened wheat bread, which process comprises forming a dough comprising baking flour, vital wheat gluten, wheat germ having substantially no glutathione, and soybean flour or soya concentrate sufficient to provide a final baked bread containing from about 18 to about 25% by weight of protein; from about 450 to about 850 ppm by weight of ascorbic acid based on the total weight of dry ingredients; from about 5 to about 10% by weight of potassium bromate based on the ascorbic acid; together with water; and fermenting and baking the dough.

3. A process according to claim 1 or claim 2, wherein the dough contains about 50% by weight of wheat flour based on dry ingredients.

4. A process according to any one of the preceding claims, wherein the dough contains from about 16 to about 24% by weight of wheat germ and/or from about 6 to about 10% by weight of soybean flour or soya concentrate and/or from about 18 to about 25% by weight of wheat gluten based on dry ingredients.

5. A process according to claim 4, wherein the dough contains about 20% by weight of wheat germ and/or about 8% by weight of soybean flour or soya concentrate and/or about 22% by weight of wheat gluten based on dry ingredients.

6. A process according to any one of the preceding claims, wherein the soya product used comprises soy flakes steamed substantially to eliminate sulfhydryl therefrom or soya concentrate.

7. A process according to any one of the preceding claims, which includes the steps of separately preparing compositions for a sponge and for other ingredients of the final dough, each composition comprising the same or different ingredients, combining the sponge composition and the other composition, and then baking the thus-formed dough mixture.

8. A process as claimed in claim 7, wherein the ascorbic acid is apportioned between the two compositions.

9. A process according to any one of the preceding claims, wherein the ascorbic acid is coated with a water-soluble material, and preferably dry mixed with separate sponge and other dough ingredients.

10. A process according to any one of the preceding claims, wherein at least about 30 ppm of potassium bromate is included in the dough, preferably from about 30 to about 50 ppm based on dry ingredients.

11. Bread or other baked cereal goods when produced by a process according to any one of the preceding claims.

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 194 189 (GRANDS MOULINS DE PANTIN S.A.)<br>* Page 1, lines 13-16; page 3, lines 24-30; claims 1,2,4 * | 1,11 | A 21 D 2/22<br>A 21 D 2/26<br>A 21 D 2/38 |
| X | GB-A- 614 545 (VERKADE'S FABRIEKEN N.V.)<br>* Example 1; claim 1 * | 1,11 | |
| X | GB-A-1 103 742 (INTERNATIONAL MILLING CO.)<br>* Page 1, line 70 - page 3, line 14; tables II,IV; claim 1 * | 1,11 | |
| A | THE BAKERS DIGEST, vol. 49, no. 6, December 1975, pages 18-22; K.F. FINNEY: "A sugar-Free formula for regular and high-protein breads"<br>* Page 19, column 1 - page 22, column 3, tables III,IV * | 2,4,5, 11 | |
| A | GB-A-1 243 867 (THE OGILVIE FLOUR MILLS CO.)<br>* Page 1, lines 13-77; page 2, line 6 - page 3, line 17 * | 2,7,8, 10 | TECHNICAL FIELDS SEARCHED (Int. Cl.4)<br><br>A 21 D |
| A,D | US-A-3 519 441 (P.J. FERRARA)<br>* Column 3, line 26 - column 4, line 48; example III; claims 1,5 * | 6 | |

The present search report has been drawn up for all claims

| Place of search | Date of completion of the search | Examiner |
|---|---|---|
| THE HAGUE | 31-10-1988 | GROENENDIJK M.S.M. |